# FASCICULE DE BREVET EUROPEEN

(11) **EP 3 288 785 B1**
(45) Date de publication et mention de la délivrance du brevet: **01.01.2020**
(21) Numéro de dépôt: 16721204.2
(22) Date de dépôt: 22.04.2016
(51) Int. Cl.: B60D 1/01, B62D 53/12

(54) **SELLETTE À VERROUILLAGE AUTOMATIQUE AVEC MISE EN PLACE D'UNE PIÈCE DE CAPOTAGE**
AUTOMATISCH VERRIEGELNDE SATTELKUPPLUNG MIT INSTALLATION EINES VERKLEIDUNGSTEILS
AUTOMATICALLY LOCKING FIFTH WHEEL WITH INSTALLATION OF A COWLING PART

(30) Priorité: 27.04.2015 FR 1553770
(43) Date de publication de la demande: 07.03.2018
(73) Titulaire: Lohr Industrie, 67980 Hangenbieten (FR)
(72) Inventeur: OBER, Jacques, 67000 Strasbourg (FR); ARNAUD, Loïc, 67000 Strasbourg (FR)
(74) Mandataire: Merckling, Norbert
(86) Numéro de dépôt international: PCT/FR2016/050955
(87) Numéro de publication internationale: WO 2016/174333

(56) Documents cités:
- EP-A1- 1 655 212
- DE-A1- 3 728 090
- US-A- 3 145 006
- US-A- 3 608 934
- US-B1- 6 908 093

## Description

### Domaine technique

La présente invention se rapporte à une sellette prévue pour équiper un véhicule tracteur dans le but de se verrouiller automatiquement avec le pivot d'attelage d'une semi-remorque.

L'invention concerne plus particulièrement une sellette prévue pour en outre mettre en place une pièce de capotage autour du pivot d'attelage d'une semi-remorque en vue du verrouillage de cette pièce de capotage avec une nacelle réceptrice prévue sur une structure ferroviaire de transport de la semi-remorque.

### Etat de la technique

Le pivot d'attelage des semi-remorques normalisées est prévu pour venir s'engager de façon dissociable sur une sellette portée par un véhicule tracteur afin de former une articulation de pivotement permettant le déplacement des semi-remorques par le véhicule tracteur qui leur est associé.

Par le brevet EP 1874607 au nom du déposant, on connait un dispositif de transport des semi-remorques dans une unité ferroviaire dans lequel une pièce de capotage est montée, par une ouverture centrale, autour du pivot d'attelage des semi-remorques afin d'être reçue dans un élément récepteur, dénommée nacelle, qui est montée sur l'unité ferroviaire. Cette nacelle a notamment pour but de centrer automatiquement et de verrouiller la pièce de capotage, et donc le pivot d'attelage, lors de la réception de la pièce de capotage dans la nacelle. Cette nacelle est habituellement actionnée par un moyen d'élévation.

La pièce de capotage et la nacelle réceptrice divulguées par le brevet EP 1874607 sont des dispositifs spécifiques qui existent uniquement dans les dispositifs de transport des semi-remorques commercialisés par le déposant.

La pièce de capotage, une fois montée autour du pivot d'attelage d'une semi-remorque et verrouillée sur ledit pivot d'attelage, sert alors d'interface de liaison entre la semi-remorque et la nacelle de l'unité ferroviaire pour son immobilisation et son transport, tout comme un pivot d'attelage sert habituellement d'interface de liaison entre la semi-remorque et la sellette d'un véhicule tracteur pour son transport. Bien entendu, la pièce de capotage est amovible, de manière à pouvoir libérer le pivot d'attelage lorsque la semi-remorque soit être transportée de manière classique par un véhicule tracteur.

Cette pièce de capotage, par son verrouillage dans une nacelle réceptrice spécifiquement adaptée, permet une immobilisation de la semi-remorque sur l'unité ferroviaire qui est beaucoup plus satisfaisante que les dispositifs classiques qui immobilisent une semi-remorque sur une unité ferroviaire en retenant ladite semi-remorque directement par son pivot d'attelage.

La pièce de capotage sert également de protection pour le pivot d'attelage autour duquel elle est montée. Lorsqu'une pièce de capotage est en place autour du pivot d'attelage d'une semi-remorque et que cette semi-remorque est immobilisée sur une unité ferroviaire par l'engagement à verrouillage de la pièce de capotage par une nacelle de l'unité ferroviaire, en cas de choc subit par ladite unité ferroviaire, notamment en cas de tamponnage, ce choc est transmis à la pièce de capotage par l'intermédiaire de la nacelle. La pièce de capotage et la nacelle peuvent alors comporter un dispositif destiné à protéger l'intégrité structurelle de la nacelle et du pivot d'attelage. Dans ce cas, la pièce de capotage présente également un rôle de protection pour le pivot d'attelage de la semi-remorque.

La mise en place d'une pièce de capotage autour du pivot d'attelage d'une semi-remorque se fait actuellement de manière manuelle, ce qui est parfois difficile et contraignant. Une telle mise en place fait perdre un temps précieux et nécessite soit que le chauffeur effectue lui-même cette tâche et fasse des allers et retours entre son tracteur et la semi-remorque, soit qu'une personne supplémentaire s'occupe de la manipulation des pièces de capotage.

L'objet de la présente invention vise par conséquent à pallier les inconvénients de l'art antérieur et proposer une nouvelle sellette prévue pour équiper tout type de véhicule tracteur susceptible de déplacer une semi-remorque par engagement et verrouillage avec son pivot d'attelage de manière classique. L'objet de l'innovation vise plus particulièrement à proposer une sellette prévue pour engager et verrouiller une pièce de capotage autour du pivot d'attelage d'une semi-remorque lors de l'engagement et le verrouillage dudit pivot d'attelage un véhicule tracteur équipé de la sellette de l'invention.

Par le document EP 1665212 on connait une sellette pour véhicule tracteur prévue pour se verrouiller de manière classique avec le pivot d'attelage d'une semi-remorque. Cette sellette se particularise en ce qu'elle comporte un outre un dispositif prévu pour positionner un bloc de jonction contre la face de dessous du pivot d'attelage. Ce bloc de jonction permet de réaliser la connexion fluidique et énergétique entre la semi-remorque et le véhicule tracteur. Ledit bloc de jonction ne sert pas d'interface de liaison entre la semi-remorque et la sellette d'un véhicule tracteur pour son transport, car ladite semi-remorque est tractée de manière classique par son pivot d'attelage qui reste libre d'accès et aucune force de traction n'est exercée sur le bloc de jonction positionné en-dessous dudit pivot d'attelage. Le bloc de jonction n'a pas de rôle protecteur pour le pivot d'attelage et ne permet pas d'améliorer l'immobilisation d'une semi-remorque sur une unité ferroviaire.

### Description de l'invention

Dans le cadre des dispositifs de transport des semi-remorques évoqués précédemment, le déposant a développé une sellette pour véhicule tracteur capable non seulement de former une articulation de pivotement classique avec le pivot d'attelage d'une semi-remorque, permettant le déplacement de cette semi-remorque, mais également capable de mettre en place une pièce de capotage autour du pivot d'attelage en vue de son verrouillage avec une nacelle, par exemple lorsque la semi-remorque a été déplacée et positionnée par le véhicule tracteur sur la structure ferroviaire prévue pour son transport.

Les objets assignés à l'invention sont atteints à l'aide d'un ensemble formé par une sellette réceptrice d'un pivot d'attelage de semi-remorque et par au moins une pièce de capotage, dans lequel :
- la sellette est prévue pour équiper un véhicule tracteur, présente une ouverture en vé pour ledit pivot d'attelage, et comprend un système de verrouillage et de déverrouillage pour le pivot d'attelage ;
- l'au moins une pièce de capotage est prévue pour être engagée et verrouillée autour dudit pivot d'attelage pour servir d'interface de liaison et de moyen d'immobilisation entre la semi-remorque et une unité ferroviaire lorsque ladite semi-remorque est transportée sur une unité ferroviaire ;
   caractérisé en ce que :
   - l'au moins une pièce de capotage est stockée dans la sellette ; et en ce que
   - la sellette comprend un système de mise en place de l'au moins une pièce de capotage autour du pivot d'attelage.

Selon un exemple de mise en œuvre de l'invention, le système de verrouillage et de déverrouillage pour le pivot d'attelage comprend les moyens suivants :
- deux bras de maintien et de centrage montés pivotants au niveau de leur extrémité avant entre une position rapprochée de fermeture dans laquelle le pivot d'attelage est verrouillé et une position éloignée d'ouverture dans laquelle le pivot d'attelage est déverrouillé et dans laquelle les deux bras de maintien et de centrage présentent un écartement suffisant pour permettre le passage de la pièce de capotage ;
- un moyen de verrouillage du pivot d'attelage monté sur un des bras de maintien et de centrage pour recevoir le pivot d'attelage en verrouillage automatique.

Selon un autre exemple de mise en œuvre de l'invention, les bras de maintien et de centrage présentent chacun une rampe inclinée prévues de sorte que lorsque les bras de maintien et de centrage sont en position rapprochée de fermeture, les rampes inclinées de ceux-ci forment une ouverture en vé qui prolonge l'ouverture en vé de la sellette.

Selon un exemple supplémentaire de mise en œuvre de l'invention, les rampes inclinées présentent chacune une découpe en vis-à-vis au niveau de l'extrémité libre des bras de maintien et de centrage dirigée vers l'ouverture en vé de la sellette, de sorte que lorsque les bras de maintien et de centrage sont en position rapprochée de fermeture les découpes forment une fente réceptrice pour le pivot d'attelage qui est centrée par rapport à l'axe longitudinal de la sellette et les rampes inclinées et l'ouverture en vé de la sellette convergent vers la fente réceptrice.

Selon un autre exemple de mise en œuvre de l'invention, le système de verrouillage et de déverrouillage pour le pivot d'attelage comprend en outre un vérin d'ouverture monté transversalement entre les bras de maintien et de centrage pour les déplacer de manière symétrique entre leur position rapprochée de fermeture et leur position éloignée d'ouverture.

Selon une variante de mise en œuvre de l'invention, le moyen de verrouillage du pivot d'attelage comprend :
- un crochet de verrouillage du pivot d'attelage monté pivotant sur un des bras de maintien et de centrage ; et
- un doigt de blocage du crochet de verrouillage monté pivotant sur un des bras de maintien et de centrage, le crochet de verrouillage et le doigt de blocage étant prévus chacun sur un bras de maintien et de centrage distinct.

Selon une variante de mise en œuvre de l'invention, le moyen de verrouillage du pivot d'attelage comprend deux doigts de blocage montés pivotants sur un des bras de maintien et de centrage, les doigts de blocage étant prévus chacun sur un bras de maintien et de centrage distinct.

Selon un exemple de mise en œuvre de l'invention, le système de mise en place d'une pièce de capotage est situé sous le système de verrouillage et de déverrouillage.

Selon un autre exemple de mise en œuvre de l'invention, le système de mise en place d'une pièce de capotage comprend un support pour pièces de capotage mobile verticalement entre une position basse de chargement d'une pièce de capotage et une position haute de mise en place d'une pièce de capotage autour du pivot d'attelage.

Selon encore un autre exemple de mise en œuvre de l'invention, le système de mise en place d'une pièce de capotage comprend en outre les moyens suivants :
- un magasin pouvant contenir une ou plusieurs pièces de capotage ;
- un dispositif d'approvisionnement qui alimente le support pour pièces de capotage en pièces de capotage à partir du magasin.

Selon un exemple supplémentaire de mise en œuvre de l'invention, le support pour pièces de capotage est déplacé verticalement par une bielle de levée des pièces de capotage dont une première extrémité est montée pivotante sur l'extrémité d'un vérin de levée des pièces de capotage qui est sensiblement horizontal, tandis que l'autre extrémité de la bielle de levée des pièces de capotage est montée pivotante sous le support pour pièces de capotage.

Selon un autre exemple de mise en œuvre de l'invention, le dispositif d'approvisionnement comprend un élément de poussée, un vérin de poussée des pièces de capotage et des bielles de poussée des pièces de capotage.

Selon encore un autre exemple de mise en œuvre de l'invention, l'élément de poussée est mobile horizontalement et en ce que le vérin et les bielles de poussée des pièces de capotage sont horizontaux.

Selon un exemple supplémentaire de mise en œuvre de l'invention, l'élément de poussée comporte une plaque de poussée prévu pour pousser les pièces de capotage depuis le magasin vers le support pour pièces de capotage.

Selon un autre exemple de mise en œuvre de l'invention, le magasin est sous la forme d'une gouttière dans laquelle coulisse l'élément de poussée

Les avantages de la présente invention sont particulièrement nombreux.

Comportant un système permettant de mettre en place une pièce de capotage autour du pivot d'attelage, par exemple de manière entièrement automatisée, la sellette de l'invention permet au chauffeur de mettre en place les pièces de capotage sur les pivots d'attelage sans l'aide d'un autre opérateur et sans avoir à quitter son poste de conduite.

La sellette de l'invention fait ainsi gagner du temps lors du chargement des semi-remorques sur un wagon. En effet, elle permet tout d'abord de supprimer l'étape durant laquelle l'opérateur met habituellement en place la pièce de capotage manuellement autour du pivot d'attelage de la semi-remorque et également de verrouiller et de déverrouiller automatiquement le pivot d'attelage du véhicule tracteur.

Ainsi, la sellette assure les fonctions suivantes :
- Attelage d'une semi-remorque standard. Le verrouillage est automatique lors du recul du véhicule tracteur.
- Transport de la semi-remorque via le véhicule tracteur, par l'intermédiaire du pivot d'attelage.
- Dételage d'une semi-remorque standard.
- Mise en place d'une pièce de capotage autour du pivot d'attelage.
- Possibilité de mise en place de plusieurs pièces de capotage sans avoir à recharger la sellette.
- Dételage d'une semi-remorque standard avec une pièce de capotage en place.

Au sein d'une même sellette de l'invention, par leur forme et leur conception, le système de verrouillage et de déverrouillage pour le pivot d'attelage et le système de mise en place d'une pièce de capotage sont mutuellement compatibles, notamment du point de vue de leur encombrement respectif, de sorte que ces systèmes n'entravent pas mutuellement leurs mouvements respectifs.

Afin d'être compatible avec les semi-remorques normalisées, ce qui impose des contraintes supplémentaires de dimensionnement et d'encombrement pour sa conception, la sellette de l'invention présente avantageusement une forme et des dimensions similaires à celle d'une sellette standard. Ainsi, la sellette selon l'invention respecte les interfaces standards d'une sellette classique et elle peut être facilement adaptée à d'autres dimensions par l'homme du métier.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective de dessus d'une la sellette de l'invention avec un système de verrouillage et de déverrouillage à deux doigts et dont les bras de maintien et de centrage sont en position rapprochée de fermeture ;
- la figure 2 est une vue en perspective de dessus de la sellette de la figure 1, dont les bras de maintien et de centrage sont en position éloignée d'ouverture ;
- les figures 3 à 6 sont des vues de détails de dessus illustrant les séquences de verrouillage automatique d'un pivot d'attelage avec un système de verrouillage et de déverrouillage à crochet bloqué par le bas ;
- les figures 7 à 10 sont des vues de détails de dessus illustrant les séquences de verrouillage automatique d'un pivot d'attelage avec un système de verrouillage et de déverrouillage à crochet bloqué par le haut ;
- les figures 11 à 13 sont des vues de détails de dessus illustrant les séquences de verrouillage automatique d'un pivot d'attelage avec un système de verrouillage et de déverrouillage à deux doigts ;
- les figures 14 et 15 sont des vues de détail en coupe de profil illustrant l'engagement de l'ouverture d'une pièce de capotage sur un pivot d'attelage ;
- la figure 16 est une vue de détail de dessus d'une sellette dont les bras de maintien et de centrage sont en position éloignée d'ouverture et dont le support pour pièces de capotage comprend une pièce de capotage partiellement engagée sur un pivot d'attelage ;
- la figure 17 est une vue de détail en perspective correspondant à la figure 16 ;
- la figure 18 est une figure identique à la figure 17, mais dans laquelle une pièce de capotage en entièrement engagée sur un pivot d'attelage ;
- la figure 19 est une vue en perspective de dessous de la sellette de l'invention dont les bras de maintien et de centrage sont en position éloignée d'ouverture ;
- la figure 20 est une vue de détail de la figure 19, dans laquelle les bielles de poussée des pièces de capotage sont en position rétractée ;
- la figure 21 est une figure identique à la figure 20, mais dans laquelle les bielles de poussée des pièces de capotage sont en position déployée, avec la plaque de poussée en appui contre les pièces de capotage ;
- la figure 22 est une vue de détail de dessus correspondant à la figure 21 ;
- la figure 23 est une figure identique à la figure 22, mais dans laquelle une pièce de capotage est partiellement introduite dans le support pour pièces de capotage ;
- la figure 24 est une vue en coupe de profil correspondant à un détail de la figure 23 ; et
- la figure 25 est une figure identique à la figure 23, mais dans laquelle une pièce de capotage est entièrement introduite dans le support pour pièces de capotage.

### Mode(s) de réalisation de l'invention

Les éléments structurellement et fonctionnellement identiques présents sur plusieurs figures distinctes, sont affectés d'une même référence numérique ou alphanumérique. Sur les différentes figures, la partie supérieure de la sellette de l'invention n'est pas représentée, laissant apparaître les éléments mobiles de celle-ci. De même la semi-remorque n'est pas représentée, seul son pivot d'attelage est représenté sur les figures.

La sellette (1) de l'invention comprend à la fois un système de verrouillage et de déverrouillage (2) pour le pivot d'attelage (3) d'une semi-remorque et un système de mise en place (4) d'une pièce de capotage (5) autour du pivot d'attelage (3).

Le système de verrouillage et de déverrouillage (2) pour le pivot d'attelage (3) se particularise par le fait qu'il doit pouvoir être éloigné du pivot d'attelage (3) pour laisser un espace libre pour la mise en place d'une pièce de capotage (5) sur celui-ci après son déverrouillage.

De nombreuses variantes sont possibles pour le système de verrouillage et de déverrouillage (2).

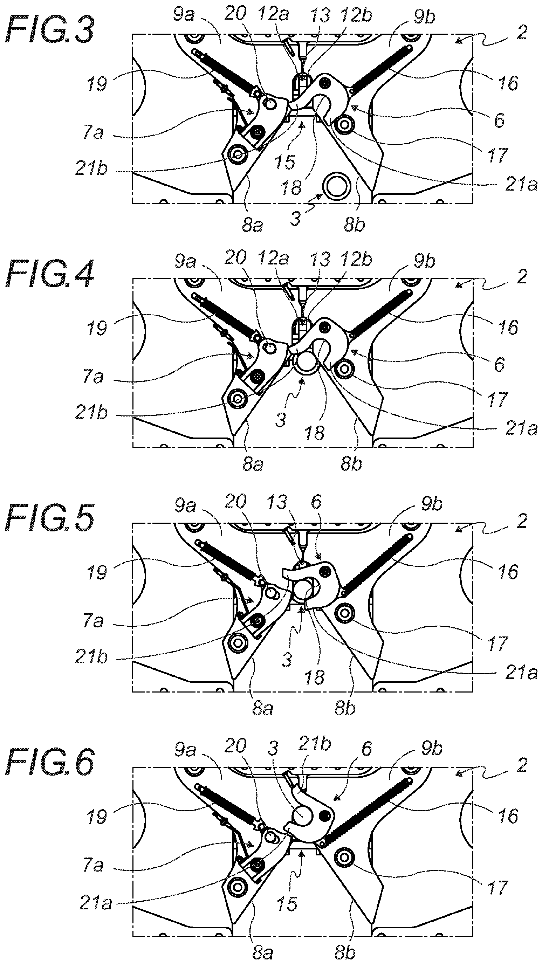

Selon les deux variantes représentées sur les figures 3 à 6 et 7 à 10, le système de verrouillage et de déverrouillage (2) de l'invention comporte, de manière assez classique, un crochet de verrouillage (6) du pivot d'attelage (3) et un doigt de blocage (7a, 7b) du crochet de verrouillage (6) prévus sensiblement au niveau du point de convergence de l'ouverture en vé (8) de la sellette (1) pour y recevoir le pivot d'attelage (3) en verrouillage automatique. Le crochet de verrouillage (6) et le doigt de blocage (7a, 7b) sont chacun montés pivotants sur un bras de maintien et de centrage (9a, 9b) distinct. La sellette (1) comporte en effet deux bras de maintien et de centrage (9a, 9b) montés en vis-à-vis et montés pivotants au niveau de leur extrémité avant, à la manière d'une pince de crabe, entre une position rapprochée de fermeture et une position éloignée d'ouverture. Ces bras de maintien et de centrage (9a, 9b) présentent une forme incurvée avec un profil latéral externe (10) qui épouse sensiblement la forme du pourtour interne de la sellette (1) et un profil latéral interne (11) évidé de manière à laisser entre eux un espace libre, même lorsqu'il sont pivotés en rapprochement l'un de l'autre.

Au niveau de leur extrémité libre dirigée vers l'ouverture en vé (8) de la sellette (1), les bras de maintien et de centrage (9a, 9b) présentent chacun une rampe inclinée (8a, 8b) comportant une découpe (12a, 12b). Ces rampes inclinées (8a, 8b) sont en vis-à-vis de sorte que lorsque les bras de maintien et de centrage (9a, 9b) sont en position rapprochée de fermeture, les rampes inclinées (8a, 8b) de ceux-ci forment une ouverture en vé qui prolonge l'ouverture en vé (8) de la sellette (1).

Les deux découpes (12a, 12b) sont également en vis-à-vis de sorte que lorsque les bras de maintien et de centrage (9a, 9b) sont rapprochés l'un vers l'autre jusqu'à ce que leurs extrémités libres soient en contact, elles forment une fente réceptrice (13) dont la largeur est légèrement supérieure à celle de la tige (14) du pivot d'attelage (3). Cette fente réceptrice (13) est centrée par rapport à l'axe longitudinal de la sellette (1) et présente une ouverture (15) dirigée vers l'arrière de la sellette (1), dans le prolongement des rampes inclinées (8a, 8b) des bras (9a, 9b) et de l'ouverture en vé (8) de de la sellette (1).

Lorsque les bras de maintien et de centrage (9a, 9b) sont en position rapprochée de fermeture les rampes inclinées (8a, 8b) et l'ouverture en vé (8) de la sellette (1) convergent vers la fente réceptrice (13) pour guider le pivot d'attelage (3) dans celle-ci lorsque le tracteur recule vers la sellette (1).

Le système de verrouillage et de déverrouillage (2) de l'invention verrouille automatiquement le pivot d'attelage (3) lors du recul du véhicule tracteur vers la semi-remorque portant ce pivot d'attelage (3). Dans ce but, le crochet de verrouillage (6) et le doigt de blocage (7a, 7b) comportent chacun un ressort (16, 19).

Le crochet de verrouillage (6) comporte un ressort (16) de rappel élastique le rappelant dans sa position initiale, ce rappel étant bloqué par une butée (17) contre laquelle le crochet de verrouillage (6) est en contact lorsqu'il n'est pas pivoté par l'avancée du pivot d'attelage (3). Le crochet de verrouillage (6) est positionné à proximité de la fente réceptrice (13) conformée entre les bras de maintien et de centrage (9a, 9b). Il comporte une gorge (18) prévue pour recevoir le pivot d'attelage (3) lorsque celui-ci pénètre dans ladite fente (13).

Le doigt de blocage (7a, 7b) comporte un ressort (19) de poussée élastique qui le pousse en direction du crochet de verrouillage (6), cette poussée étant limitée en amplitude par un système (20) comportant une butée logée dans un oblong.

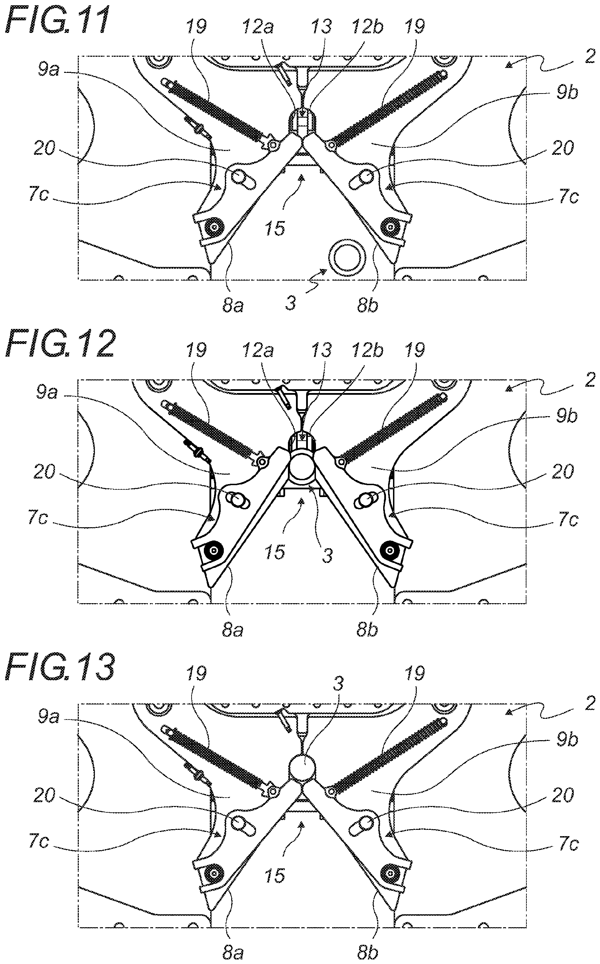

Selon une troisième variante représentée sur les figures 11 à 13, le système de verrouillage et de déverrouillage (2) de l'invention ne comporte pas de crochet de verrouillage mais comporte à la place deux doigts de blocage (7c) en vis-à-vis, chacun poussé par un ressort (19) de poussée élastique qui les pousse l'une vers l'autre, cette poussée étant limitée en amplitude par un système (20) comportant une butée logée dans un oblong. Les deux doigts de blocage (7c) sont inclinés l'un vers l'autre de sorte que leurs extrémités libres soient en contact et de sorte que chacun soit sensiblement parallèle à l'ouverture en vé (8) de la sellette (1) et à la rampe inclinée (8a, 8b) du bras de maintien et de centrage (9a, 9b) sur lequel il est monté

Les doigts de blocage (7c) sont chacun montés pivotants sur un bras de maintien et de centrage (9a, 9b) distinct, ces derniers étant similaires à ceux des deux variantes précédentes. Les bras de maintien et de centrage (9a, 9b) présentent ainsi chacun une rampe inclinée (8a, 8b) comportant une découpe (12a, 12b) formant une fente réceptrice (13) lorsque les bras de maintien et de centrage (9a, 9b) sont rapprochés l'une contre l'autre.

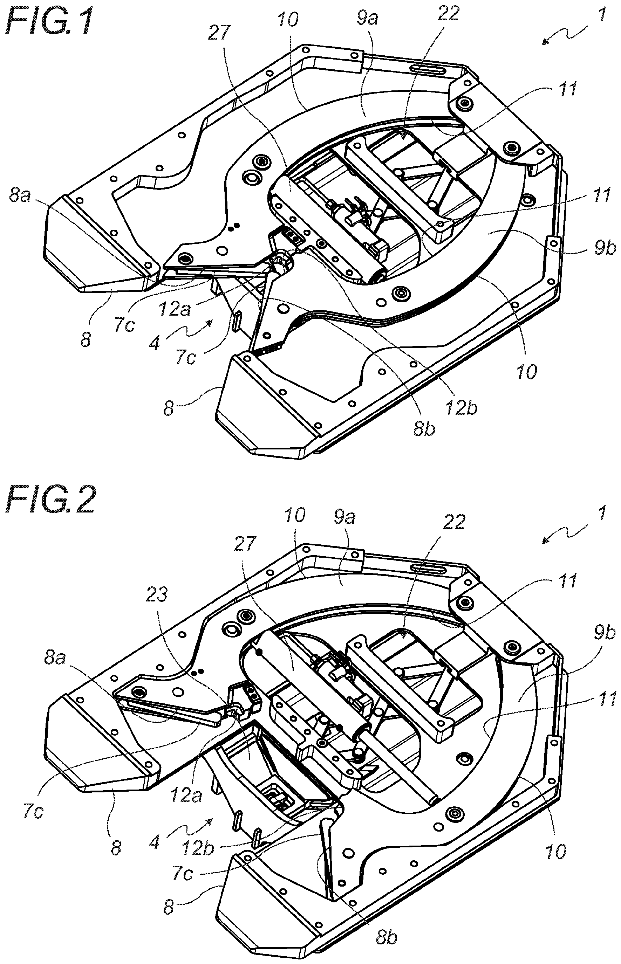

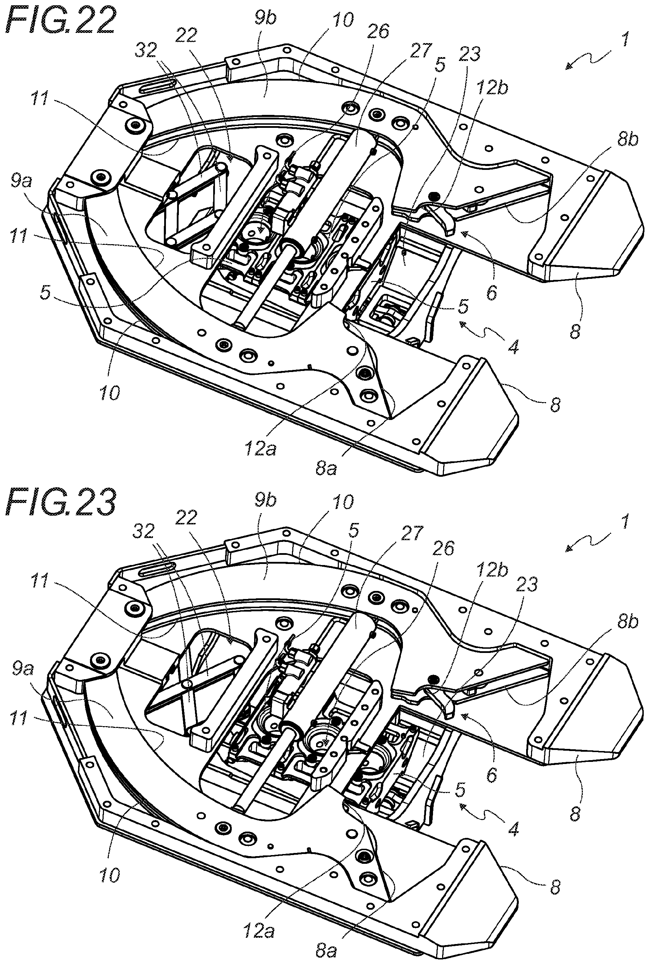

On notera que la figure 1 illustre une sellette (1) dans laquelle les bras de maintien et de centrage (9a, 9b) sont en position rapprochée de fermeture tandis que la figure 2 illustre une sellette (1) dans laquelle les bras de maintien et de centrage (9a, 9b) sont en position éloignée d'ouverture. Sur ces deux figures, ainsi que sur les figures 22 et 23, la pièce de dessus prévue pour fermer la sellette (1) n'est pas représentée, de sorte de permettre de voir les moyens internes de celle-ci. On peut ainsi remarquer que les bras de maintien et de centrage (9a, 9b) sont préférentiellement chacun sous la forme de deux tôles de même forme et superposées.

Pour des raisons de visibilité, les tôles supérieures des bras de maintien et de centrage (9a, 9b) ne sont pas représentées sur les figures 3 à 13, ce qui permet notamment de voir le crochet de verrouillage (6), les doigts de blocage (7a, 7b, 7c) et les ressorts (16, 19) pour comprendre leur fonctionnement.

Le fonctionnement de la première variante du système de verrouillage et de déverrouillage (2) de l'invention va maintenant être expliqué en relation avec les figures 3 à 6.

Lors du recul du véhicule tracteur portant la sellette (1) de l'invention vers le pivot d'attelage (3) de la semi-remorque, le pivot d'attelage (3) est rapproché de l'ouverture en vé (8) de la sellette (1) (cf. figure 3) et des rampes inclinées (8a, 8b) des bras de maintien et de centrage (9a, 9b). La forme en vé de l'ouverture (8) et des rampes inclinées (8a, 8b) permet de centrer le pivot d'attelage (3) par rapport à la sellette (1) afin de le diriger vers la fente réceptrice (13) formée par les découpes (12a, 12b) en vis-à-vis des bras de maintien et de centrage (9a, 9b) qui sont alors en position extrémale de fermeture (cf. figure 1).

Le pivot d'attelage (3) arrive alors en contact contre le crochet de verrouillage (6) (cf. figure 4) et fait pivoter celui-ci en arrière alors que le pivot d'attelage (3) progresse dans la fente réceptrice (13) (cf. figure 5). Lors du pivotement du crochet de verrouillage (6), son ressort (16) de rappel élastique est étiré et l'extrémité libre (21a) du crochet de verrouillage (6) opposée à son bec d'extrémité (21b) arrive en contact contre le doigt de blocage (7a), qui est alors repoussé, s'opposant à la force de son ressort (19) de poussée élastique.

Lorsque le pivot d'attelage (3) arrive au fond de la fente réceptrice (13) (cf. figure 6), le doigt de blocage (7a) vient bloquer le crochet de verrouillage (6) en position, ce doigt de blocage (7a) en venant en contact de butée contre l'extrémité libre (21a) du crochet de verrouillage (6). Le pivot d'attelage (3) est alors logé dans la gorge (18) du crochet de verrouillage (6) et il est immobilisé entre cette gorge (18) et le fond de la fente réceptrice (13).

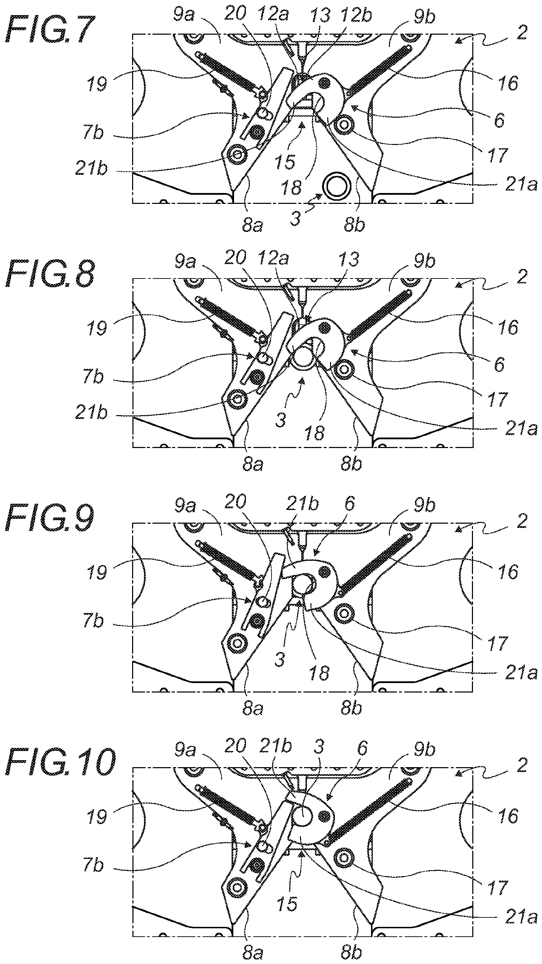

Le fonctionnement de la seconde variante du système de verrouillage et de déverrouillage (2) de l'invention va maintenant être expliqué en relation avec les figures 7 à 10.

Lors du recul du véhicule tracteur portant la sellette (1) de l'invention vers le pivot d'attelage (3) de la semi-remorque (figure 7), comme précédemment, le pivot d'attelage (3) arrive en contact contre le crochet de verrouillage (6) (cf. figure 8) et fait pivoter celui-ci en arrière alors que le pivot d'attelage (3) progresse dans la fente réceptrice (13) (cf. figure 9). Lors du pivotement du crochet de verrouillage (6), son ressort (16) de rappel élastique est étiré et le bec d'extrémité (21b) du crochet de verrouillage (6) arrive en contact contre le doigt de blocage (7a, 7b), qui est ensuite repoussé par le crochet de verrouillage (6), en opposition de la force de son ressort (19) de poussée élastique.

Lorsque le pivot d'attelage (3) arrive au fond de la fente réceptrice (13) (cf. figure 10), le doigt de blocage (7a, 7b) vient bloquer le crochet de verrouillage (6) en position en venant en contact de butée contre son bec d'extrémité (21b). Le pivot d'attelage (3) est alors logé dans la gorge (18) du crochet de verrouillage (6) et il est immobilisé entre cette gorge (18) et le fond de la fente réceptrice (13).

Le fonctionnement de la troisième variante du système de verrouillage et de déverrouillage (2) de l'invention va maintenant être expliqué en relation avec les figures 11 à 13.

Lors du recul du véhicule tracteur portant la sellette (1) de l'invention vers le pivot d'attelage (3) de la semi-remorque (figure 11), le pivot d'attelage (3) arrive en contact contre les deux doigts de blocage (7c) qui sont en contact l'une contre l'autre, poussés chacun par leur un ressort (19) de poussée élastique respectif.

En continuant sa course guidée, le pivot d'attelage (3) écarte les deux doigts de blocage (7c) en passant entre ceux-ci et progresse dans la fente réceptrice (13) (cf. figure 12).

Lorsque le pivot d'attelage (3) arrive au fond de la fente réceptrice (13) (cf. figure 13), les deux doigts de blocage (7c) reprennent leur position initiale et viennent bloquer le pivot d'attelage (3) en position en venant en contact de butée contre sa face dirigée l'arrière de la sellette (1). Le pivot d'attelage (3) est alors logé dans la gorge (18) du crochet de verrouillage (6) et il est immobilisé entre cette gorge (18) et le fond de la fente réceptrice (13).

On notera en outre que les systèmes (20) comportant une butée logée dans un oblong des doigts de blocage (7c), dans cette position de verrouillage, créent chacun un couple qui verrouille le pivot d'attelage (3), la force de ce couple étant proportionnelle à la force d'appui du pivot d'attelage (3) contre les extrémités des doigts de blocage (7c) en contact avec lui.

Quelle que soit la variante du système de verrouillage et de déverrouillage (2), on remarquera que toutes les opérations précédemment décrites se font de manière automatique, sans aucune intervention manuelle. Le véhicule tracteur sur lequel est montée la sellette (1) de l'invention peut alors transporter la semi-remorque attelée par son pivot d'attelage (3), par exemple pour la conduire sur un wagon.

Lorsque la semi-remorque est placée sur le wagon, une pièce de capotage (5) est alors engagée sur le pivot d'attelage (3), profitant du fait que celui-ci est centré par rapport à la sellette (1).

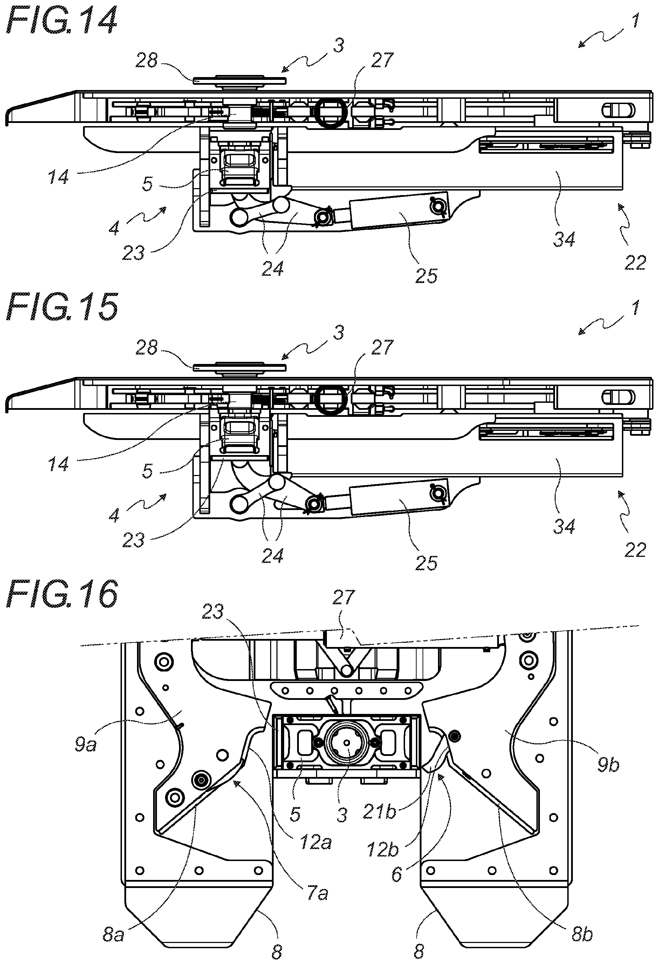

Afin de permettre la mise en place de plusieurs pièces de capotage (5), par exemple quatre, sans avoir à recharger la sellette (1), le système de mise en place (4) d'une pièce de capotage (5) comprend un magasin (22) pouvant contenir une ou plusieurs pièces de capotage (5) placées les unes à la suite des autres. Tel que représenté sur les figures 14 et 15, ce magasin (22) est situé sous le système de verrouillage et de déverrouillage (2) afin que le système de mise en place (4) d'une pièce de capotage (5) et le système de verrouillage et de déverrouillage (2) n'interfèrent pas dans leur fonctionnement respectif.

Un support (23) pour pièces de capotage (5) est monté mobile verticalement sous la fente réceptrice (13) de manière à pouvoir mettre en place une pièce de capotage (5) autour du pivot d'attelage (3) lorsque celui-ci est verrouillé par le système de verrouillage et de déverrouillage (2). Ce support (23) pour pièces de capotage (5) est alimenté en pièces de capotage (5) par le magasin (22) et présente un profil récepteur présentant une forme complémentaire à celle du profil des pièces de capotage (5).

Le déplacement vertical du support (23) pour pièces de capotage (5) est obtenu par une bielle de levée (24) des pièces de capotage (5) dont une première extrémité est montée pivotante sur l'extrémité d'un vérin de levée (25), tandis que son autre extrémité est montée pivotante sous le support (23) pour pièces de capotage (5).

Le support (23) est guidé par rapport à la sellette (1) pour reprendre les efforts transversaux et longitudinaux générés par la mise en place de la pièce de capotage (5) autour du pivot d'attelage (3). Le vérin de levée (25) des pièces de capotage (5) est sensiblement horizontal, ce qui permet à la sellette (1) de l'invention de respecter les dimensions habituelles d'une sellette (1). L'axe entre la bielle (24) et le vérin (25) est guidé horizontalement par rapport à la sellette (1). La position et les distances égales entre les axes des bielles (24) transforment le déplacement horizontal de l'axe entre la bielle (24) et le vérin (25) en déplacement vertical de l'axe entre la bielle (24) et le support (23).

Comme cela est représenté sur les figures 14 et 15, le support (23) pour pièces de capotage (5) est déplacé vers le haut sous l'action du vérin de levée (25) des pièces de capotage (5) de sorte d'engager l'ouverture (26) centrale d'une pièce de capotage (5) sur le pivot d'attelage (3) situé au-dessus. Lors de cette étape de déplacement vers le haut du support (23) pour pièces de capotage (5), la pièce de capotage (5) engagée autour du pivot d'attelage (3) arrive en butée contre la face inférieure des bras de maintien et de centrage (9a, 9b).

La pièce de capotage (5) n'est alors pas totalement mise en place autour du pivot d'attelage (3), mais elle est centrée par rapport à celui-ci.

Avant de pouvoir totalement mettre en place la pièce de capotage (5) sur le pivot d'attelage (3), de sorte que l'ouverture (26) de la pièce de capotage (5) soit entièrement engagée autour du pivot d'attelage (3), il est d'abord nécessaire d'éloigner les bras de maintien et de centrage (9a, 9b).

Les bras de maintien et de centrage (9a, 9b) sont alors écartés par un vérin d'ouverture (27) monté transversalement entre ceux-ci, de préférence sur le dessus. Les bras (9a, 9b) sont écartés dans leur position extrémale d'ouverture, ce qui déverrouille complètement le pivot d'attelage (3) (cf. figure 16).

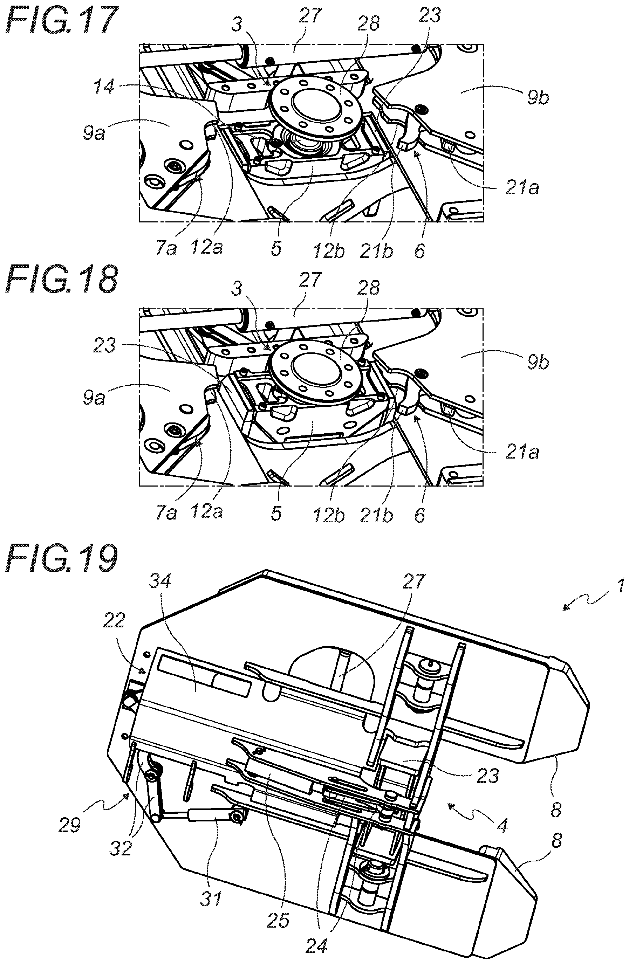

Là encore ces opérations peuvent se faire de manière automatique, sans aucune intervention manuelle. Le pivot d'attelage (3) est alors centré sur une pièce de capotage (5) tout en étant partiellement engagé dans l'ouverture (26) de celle-ci (cf. figure 17).

L'écartement des bras de maintien et de centrage (9a, 9b) doit être suffisant pour permettre le libre passage de la pièce de capotage (5) en vue de son engagement autour du pivot d'attelage (3) alors que dans les dispositifs antérieurs, un tel écartement aurait seulement pour but de permettre le passage du pivot d'attelage (3).

Le vérin de levée (25) est alors actionné à nouveau pour continuer le déplacement vers le haut du support (23) pour pièces de capotage (5), jusqu'à ce que la pièce de capotage (5) partiellement engagée avec le pivot d'attelage (3) soit entièrement mise en place sur celui-ci (cf. figure 18), c'est-à-dire que la pièce de capotage (5) soit en position haute correspondant à une butée verticale contre la plaque de support (28) du pivot d'attelage (3).

La pièce de capotage (5) est alors verrouillée autour du pivot d'attelage (3) par la sellette (1).

La pièce de capotage (5) étant solidarisée au pivot d'attelage (3), le support (23) pour pièces de capotage (5) est descendu par le vérin de levée (25) des pièces de capotage (5) jusqu'à ce que la pièce de capotage (5) soit entièrement extraite du support (23) qui est alors en position basse.

Le véhicule tracteur peut alors s'éloigner, laissant sur place une semi-remorque dont le pivot d'attelage (3) est équipé d'une pièce de capotage (5) qui pourra être reçue ultérieurement dans la nacelle réceptrice d'une structure ferroviaire de transport tel que cela est décrit dans le brevet EP 1874607. Le véhicule tracteur peut alors s'atteler avec une autre semi-remorque pour recommencer les opérations décrite précédemment.

Préalablement, une nouvelle pièce de capotage (5) doit cependant être introduite dans le support (23) pour pièces de capotage (5). En effet, tant que le magasin (22) de la sellette (1) comporte des pièces de capotage (5), il n'est pas besoin de l'alimenter. Ce n'est que lorsque toutes les pièces de capotage (5) du magasin (22) ont été mises en place sur des semi-remorques que la sellette (1) de l'invention doit être rechargée en pièces de capotage (5).

La recharge s'effectue une fois le vérin (31) rentré et lorsque les bielles de poussée (32) et la plaque de poussée (33) sont rétractées. Dans cette position l'ouverture dans la face supérieure de la sellette (1) permet le chargement d'une pièce de capotage (5) dans le magasin (2). L'actionnement du vérin (31) permet de l'avancer dans le magasin (22) en fin de course. La répétition de ces opérations permet de charger plusieurs pièces de capotage (5) dans le magasin (22).

Avant le réapprovisionnement du support avec la pièce de capotage (5) suivante du magasin (22), la sellette (1) est dans une configuration telle que représenté sur la figure 2.

Afin de bien comprendre la nature et le fonctionnement du système de mise en place (4) d'une pièce de capotage (5) autour du pivot d'attelage (3) il est nécessaire de se rapporter aux vues de dessous de la sellette (1), car ce système est prévu sous la sellette (1) afin de ne pas interférer avec le système de verrouillage et de déverrouillage (2) pour le pivot d'attelage (3).

Tels que représentés sur la figure 19, le système de mise en place (4) d'une pièce de capotage (5) comprend un magasin (22), un support (23) pour pièces de capotage (5) et un dispositif d'approvisionnement (29) du support en pièces de capotage (5) à partir du magasin (22).

Le dispositif d'approvisionnement (29) comprend un élément de poussée (30) coulissant, un vérin de poussée (31) des pièces de capotage (5) et des bielles de poussée (32) des pièces de capotage (5) prévues pour alimenter le support (23) pour pièces de capotage (5) avec les pièces de capotage (5) stockées dans le magasin (22).

Sur sa face dirigée vers l'ouverture en vé (8) de la sellette (1), l'élément de poussée (30) comporte une plaque de poussée (33) présentant préférentiellement un profil de forme complémentaire à celle du profil des pièces de capotage (5).

Le magasin (22) est sous la forme d'une gouttière (34) dans laquelle coulisse l'élément de poussée (30). La gouttière (34) présente également un profil de forme complémentaire à celle du profil des pièces de capotage (5). Le magasin (22) est prévu pour pouvoir contenir plusieurs pièces de capotage (5), par exemple au nombre de quatre.

Lorsque le support (23) pour pièces de capotage (5) doit être alimenté, les pièces de capotage (5) stockées dans le magasin (22) sont poussées par l'élément de poussée (30), au niveau de sa plaque de poussée (33), et dirigées vers le support (23) pour pièces de capotage (5). Cette poussée se fait par l'intermédiaire du vérin de poussée (31) et des bielles de poussée (32). Le vérin (31) exerce sa force de poussée vers l'avant de la sellette (1), tandis que les bielles (31) transforment cette force de poussée vers l'avant en force de poussée vers l'arrière, dirigée vers le support (23) pour pièces de capotage (5), en direction de l'ouverture en vé (8) de la sellette (1).

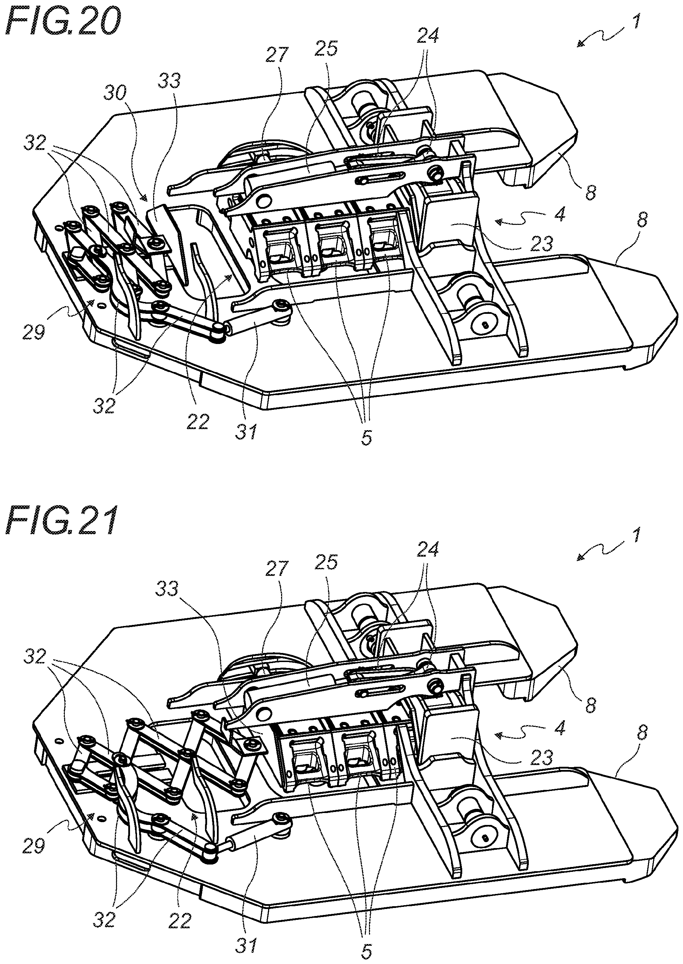

La figure 20 illustre la position rétractée du système de mise en place (4) d'une pièce de capotage (5), tandis que la figure 21 illustre la position déployée du système de mise en place (4) d'une pièce de capotage (5), lorsque les pièces de capotage (5) sont poussées en direction du support (23) pour pièces de capotage (5) par le déploiement du système de bielles (31).

Lors de cette poussée, le vérin de poussée (31) continue son déplacement jusqu'à ce qu'une pièce de capotage (5) s'engage dans le support (23) (cf. figures 22 à 24) et tombe finalement dans le support (23) pour pièces de capotage (5), qui est situé légèrement plus bas que la gouttière (34) dans laquelle coulissent les pièces de capotage (5).

Suite à ces opérations, la sellette (1) est alors prête à venir se verrouiller avec un autre pivot d'attelage (3) et à mettre en place une nouvelle pièce de capotage (5) sur ce pivot.

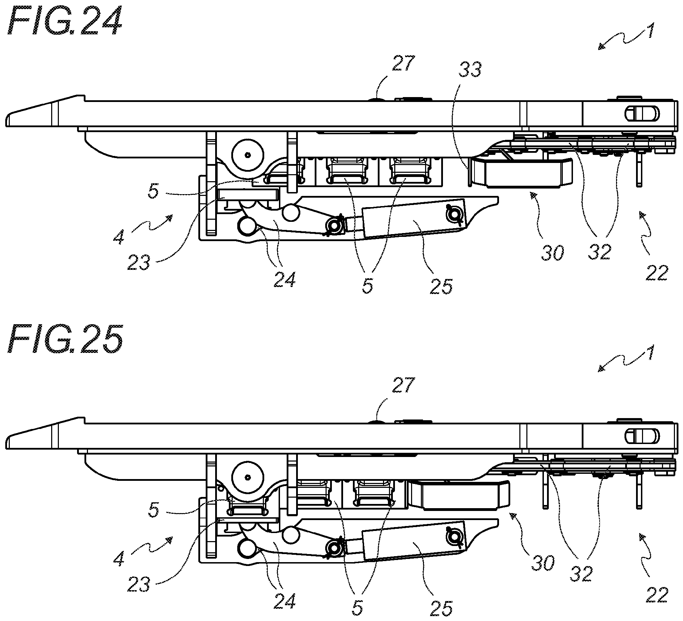

On notera que pour des raisons de visibilité, la gouttière (34) représentée sur la figure 19, n'est pas représentée sur les figures 20 et 21, ni sur les figures 24 et 25, permettant ainsi notamment de voir le dispositif d'approvisionnement (29) caché par celle-ci.

Les différentes opérations décrites précédemment, qu'il s'agisse du verrouillage du pivot d'attelage (3) ou de la mise en place d'une pièce de capotage (5), peuvent soit être réalisées manuellement, soit de manière automatisée.

Elles s'effectuent manuellement par exemple via une interface de type électromécanique avec une surveillance des états sécuritaire par des voyants visuels et/ou sonores.

Lorsque ces opérations sont automatisées, un automate associé à une interface homme/machine pilote par exemple les différentes fonctions. Des capteurs prévus dans la sellette (1) informent également l'automate et des états sécuritaires de la sellette (1). Parmi les capteurs nécessaires pour les différentes fonctions, on peut notamment citer des capteurs permettant de donner la position des bras (9a) et (9b), un capteur de position verrouillée du crochet (6), un capteur de position verrouillée du doigt de blocage (7a, 7b, 7c), un capteur position rentrée du vérin (25) ou un capteur de position basse du support (23), un capteur de position sortie du vérin (25) ou un capteur de position haute du support (23), un capteur de pression sur l'alimentation du vérin (25) ou un capteur de position de la pièce de capotage (5) engagée du support (23), un capteur de position rentrée du vérin (31) ou un capteur de position rentré dispositif d'approvisionnement (29), et un capteur de présence d'une pièce de capotage (5) dans le support (23).

Il est évident que la présente description ne se limite pas aux exemples explicitement décrits, mais comprend également d'autres modes de réalisation et/ou de mise en œuvre. Ainsi, une caractéristique technique décrite peut être remplacée par une caractéristique technique équivalente sans sortir du cadre de la présente invention et une étape décrite de mise en œuvre du procédé peut être remplacée par une étape équivalente sans sortir du cadre de l'invention tel que défini par les revendications.

Par exemple, l'invention telle que décrite s'intéresse à la mise en place d'une pièce de capotage (5) autour du pivot d'attelage (3) d'une semi-remorque. Bien que cette pièce de capotage (5) soit destinée à servir d'interface entre la semi-remorque et un nacelle réceptrice montée sur une structure ferroviaire, il est évident que l'invention peut être adaptée à la mise en place de tout type de pièce d'immobilisation autour du pivot d'attelage (3) d'une semi-remorque.

## Revendications

1. Ensemble formé par une sellette (1) réceptrice d'un pivot d'attelage (3) de semi-remorque et par au moins une pièce de capotage (5), dans lequel :
- la sellette (1) est prévue pour équiper un véhicule tracteur, présente une ouverture en vé (8) pour ledit pivot d'attelage (3), et comprend un système de verrouillage et de déverrouillage (2) pour le pivot d'attelage (3) ;
- l'au moins une pièce de capotage (5) est prévue pour être engagée et verrouillée autour dudit pivot d'attelage (3) pour servir d'interface de liaison et de moyen d'immobilisation entre la semi-remorque et une unité ferroviaire lorsque ladite semi-remorque est transportée sur une unité ferroviaire ;
**caractérisé en ce que** :
• l'au moins une pièce de capotage (5) est stockée dans la sellette (1) ; et **en ce que**
• la sellette (1) comprend un système de mise en place (4) de l'au moins une pièce de capotage (5) autour du pivot d'attelage (3).

2. Ensemble selon la revendication 1, **caractérisé en ce que** le système de verrouillage et de déverrouillage (2) pour le pivot d'attelage (3) comprend les moyens suivants :
- deux bras de maintien et de centrage (9a, 9b) montés pivotants au niveau de leur extrémité avant entre une position rapprochée de fermeture dans laquelle le pivot d'attelage (3) est verrouillé et une position éloignée d'ouverture dans laquelle le pivot d'attelage (3) est déverrouillé et dans laquelle les deux bras de maintien et de centrage (9a, 9b) présentent un écartement suffisant pour permettre le passage de la pièce de capotage (5) ;
- un moyen de verrouillage du pivot d'attelage (3) monté sur un des bras de maintien et de centrage (9a, 9b) pour recevoir le pivot d'attelage (3) en verrouillage automatique.

3. Ensemble selon la revendication 2, **caractérisé en ce que** les bras de maintien et de centrage (9a, 9b) présentent chacun une rampe inclinée (8a, 8b) prévues de sorte que lorsque les bras de maintien et de centrage (9a, 9b) sont en position rapprochée de fermeture, les rampes inclinées (8a, 8b) de ceux-ci forment une ouverture en vé qui prolonge l'ouverture en vé (8) de la sellette (1).

4. Ensemble selon la revendication 3, **caractérisé en ce que** les rampes inclinées (8a, 8b) présentent chacune une découpe (12a, 12b) en vis-à-vis au niveau de l'extrémité libre des bras de maintien et de centrage (9a, 9b) dirigée vers l'ouverture en vé (8) de la sellette (1), de sorte que lorsque les bras de maintien et de centrage (9a, 9b) sont en position rapprochée de fermeture les découpes (12a, 12b) forment une fente réceptrice (13) pour le pivot d'attelage (3) qui est centrée par rapport à l'axe longitudinal de la sellette (1) et les rampes inclinées (8a, 8b) et l'ouverture en vé (8) de la sellette (1) convergent vers la fente réceptrice (13).

5. Ensemble selon la revendication 2, **caractérisé en ce que** le système de verrouillage et de déverrouillage (2) pour le pivot d'attelage (3) comprend en outre un vérin d'ouverture (27) monté transversalement entre les bras de maintien et de centrage (9a, 9b) pour les déplacer de manière symétrique entre leur position rapprochée de fermeture et leur position éloignée d'ouverture.

6. Ensemble selon la revendication 2, **caractérisé en ce que** le moyen de verrouillage du pivot d'attelage (3) comprend :
- un crochet de verrouillage (6) du pivot d'attelage (3), monté pivotant sur un des bras de maintien et de centrage (9a, 9b) ; et
- un doigt de blocage (7a, 7b) du crochet de verrouillage (6) monté pivotant sur un des bras de maintien et de centrage (9a, 9b), le crochet de verrouillage (6) et le doigt de blocage (7a, 7b) étant prévus chacun sur un bras de maintien et de centrage (9a, 9b) distinct.

7. Ensemble selon la revendication 2, **caractérisé en ce que** le moyen de verrouillage du pivot d'attelage (3) comprend deux doigts de blocage (7c) montés pivotants sur un des bras de maintien et de centrage (9a, 9b), les doigts de blocage (7c) étant prévus chacun sur un bras de maintien et de centrage (9a, 9b) distinct.

8. Ensemble selon l'une quelconque des revendications précédentes, **caractérisé en ce que** le système de mise en place (4) d'une pièce de capotage (5) est situé sous le système de verrouillage et de déverrouillage (2).

9. Ensemble selon l'une quelconque des revendications précédentes, **caractérisé en ce que** le système de mise en place (4) d'une pièce de capotage (5) comprend un support (23) pour pièces de capotage (5) mobile verticalement entre une position basse de chargement d'une pièce de capotage (5) et une position haute de mise en place d'une pièce de capotage (5) autour du pivot d'attelage (3).

10. Ensemble selon la revendication 9, **caractérisé en ce que** le système de mise en place (4) d'une pièce de capotage (5) comprend en outre les moyens suivants :
- un magasin (22) pouvant contenir une ou plusieurs pièces de capotage (5) ;
- un dispositif d'approvisionnement (29) qui alimente le support (23) pour pièces de capotage (5) en pièces de capotage (5) à partir du magasin (22).

11. Ensemble selon la revendication 9, **caractérisé en ce que** le support (23) pour pièces de capotage (5) est déplacé verticalement par une bielle de levée (24) des pièces de capotage (5) dont une première extrémité est montée pivotante sur l'extrémité d'un vérin de levée (25) des pièces de capotage (5) qui est sensiblement horizontal, tandis que l'autre extrémité de la bielle de levée (24) des pièces de capotage (5) est montée pivotante sous le support (23) pour pièces de capotage (5).

12. Ensemble selon la revendication 10, **caractérisé en ce que** le dispositif d'approvisionnement (29) comprend un élément de poussée (30), un vérin de poussée (31) des pièces de capotage (5) et des bielles de poussée (32) des pièces de capotage (5).

13. Ensemble selon la revendication 12, **caractérisé en ce que** l'élément de poussée (30) est mobile horizontalement et **en ce que** le vérin et les bielles de poussée (32) des pièces de capotage (5) sont horizontaux.

14. Ensemble selon la revendication 12, **caractérisé en ce que** l'élément de poussée (30) comporte une plaque de poussée (33) prévu pour pousser les pièces de capotage (5) depuis le magasin (22) vers le support (23) pour pièces de capotage (5).

15. Ensemble selon la revendication 12, **caractérisé en ce que** le magasin (22) est sous la forme d'une gouttière (34) dans laquelle coulisse l'élément de poussée (30).

## Patentansprüche

1. Bauteil, bestehend aus einer Sattelkupplung (1) zur Aufnahme des Königszapfens (3) eines Aufliegers und mindestens einem Verkleidungsteil (5), in dem:
- die Sattelkupplung (1) zur Ausrüstung eines Zugfahrzeugs dient, sie weist eine V-förmige Öffnung (8) für den genannten Königszapfen (3) auf und umfasst ein Ver- und Entriegelungssystem (2) für den Königszapfen (3);
- das mindestens eine Verkleidungsteil (5) soll um diesen Königszapfen (3) einrasten und verriegelt werden, um als Verbindungsschnittstelle und Arretiervorrichtung zwischen dem Auflieger und einer Eisenbahntransporteinheit zu dienen, wenn dieser Auflieger auf einer Eisenbahntransporteinheit transportiert wird;
**dadurch gekennzeichnet, dass**:
• das mindestens eine Verkleidungsteil (5) in der Sattelkupplung (1) untergebracht ist; und dadurch dass
• die Sattelkupplung (1) ein System zum Aufbau (4) des mindestens einen Verkleidungsteils (5) um den Königszapfen (3) herum umfasst.

2. Bauteil gemäß Anspruch 1, **dadurch gekennzeichnet, dass** das Ver- und Entriegelungssystem (2) des Königszapfens (3) die folgenden Elemente umfasst:
- zwei Halte- und Zentrierarme (9a, 9b), schwenkbar montiert in Höhe ihres vorderen Endstücks zwischen einer nahen Schließposition, in der der Königszapfen (3) verriegelt ist und einer entfernten Öffnungsposition, in der der Königszapfen (3) entriegelt ist und in der die beiden Halte- und Zentrierarme (9a, 9b) einen Abstand aufweisen, der ausreicht, das Verkleidungsteil (5) hindurchzuführen;
- ein Verriegelungselement für den Königszapfen (3), montiert auf einem der Halte- und Zentrierarme (9a, 9b) zur Aufnahme des Königszapfens (3) mit automatischer Verriegelung.

3. Bauteil gemäß Anspruch 2, **dadurch gekennzeichnet, dass** die Halte- und Zentrierarme (9a, 9b) jeweils eine schiefe Ebene (8a, 8b) aufweisen, die so vorgesehen ist, dass, wenn die Halte- und Zentrierarme (9a, 9b) sich in der Schließposition befinden, ihre schiefen Ebenen (8a, 8b) jeweils eine V-förmige Öffnung bilden, die die V-förmige Öffnung der Sattelkupplung (1) verlängert.

4. Bauteil gemäß Anspruch 3, **dadurch gekennzeichnet, dass** die schiefen Ebenen (8a, 8b) jeweils einen Ausschnitt (12a, 12b) aufweisen, der gegenüber dem freien Endstück der Halte- und Zentrierarme (9a, 9b) angeordnet ist, gerichtet zur V-förmigen Öffnung (8) der Sattelkupplung (1) hin, so dass, wenn die Halte- und Zentrierarme (9a, 9b) sich in der nahen Schließposition befinden, die Ausschnitte (12a, 12b) einen Aufnahmeschlitz (13) für den Königszapfen (3) bilden, der, bezogen auf die Längsachse der Sattelkupplung (1), zentriert ist und die schiefen Ebenen (8a, 8b) und die V-förmige Öffnung (8) der Sattelkupplung (1) konvergieren in Richtung des Aufnahmeschlitzes (13).

5. Bauteil gemäß Anspruch 2, **dadurch gekennzeichnet, dass** das Ver- und Entriegelungssystem (2) für den Königszapfen (3) außerdem einen Öffnungszylinder (27) enthält, der quer zwischen den Halte- und Zentrierarmen (9a, 9b) montiert ist, um diese symmetrisch zwischen der nahen Schließposition und der entfernten Öffnungsposition zu bewegen.

6. Bauteil gemäß Anspruch 2, **dadurch gekennzeichnet, dass** das Verriegelungssystem des Königszapfens (3) umfasst:
- einen Verriegelungshaken (6) des Königszapfens (3), schwenkbar montiert auf einem der Halte- und Zentrierarme (9a, 9b); sowie
- einen Blockierstift (7a, 7b) des Verriegelungshakens (6) schwenkbar montiert auf einem der Halte- und Zentrierarme (9a, 9b), der Verriegelungshaken (6) und der Blockierstift (7a, 7b) sind jeweils auf einem anderen Halte- und Zentrierarm (9a, 9b) vorgesehen.

7. Bauteil gemäß Anspruch 2, **dadurch gekennzeichnet, dass** das Verriegelungssystem des Königszapfens (3) zwei Blockierstifte (7c) umfasst, schwenkbar montiert auf einem der Halte- und Zentrierarme (9a, 9b); die Blockierstifte (7c) sind jeweils auf einem anderen Halte- und Zentrierarm (9a, 9b) vorgesehen.

8. Bauteil gemäß irgendeinem der vorangehenden Ansprüche, **dadurch gekennzeichnet, dass** das Aufbausystem (4) des Verkleidungsteils (5) unter dem Ver- und Entriegelungssystem (2) angeordnet ist.

9. Bauteil gemäß irgendeinem der vorangehenden Ansprüche, **dadurch gekennzeichnet, dass** das Aufbausystem (4) des Verkleidungsteils (5) einen Halter (23) für Verkleidungsteile (5) enthält, der vertikal zwischen einer unteren Ladeposition eines Verkleidungsteils (5) und einer oberen Aufbauposition eines Verkleidungsteils (5) um den Königszapfen (3) herum beweglich ist.

10. Bauteil gemäß Anspruch 9, **dadurch gekennzeichnet, dass** das Aufbausystem (4) eines Verkleidungsteils (5) außerdem die folgenden Elemente umfasst:
- einen Lagerraum (22), der eines oder mehrere Verkleidungsteile (5) enthalten kann;
- eine Versorgungsvorrichtung (29), die den Halter (23) für Verkleidungsteile (5) mit Verkleidungsteilen (5) aus dem Lagerraum (22) heraus versorgt.

11. Bauteil gemäß Anspruch 9, **dadurch gekennzeichnet, dass** der Halter (23) für Verkleidungsteile (5) über eine Hubstange (24) für die Verkleidungsteile (5) vertikal verschoben werden kann, deren eines Endstück schwenkbar am Endstück eines Hubzylinders (25) der Verkleidungsteile (5) montiert ist, das im Wesentlichen horizontal ist, während das andere Endstück der Hubstange (24) der Verkleidungsteile (5) schwenkbar unter dem Halter (23) für die Verkleidungsteile (5) montiert ist.

12. Bauteil gemäß Anspruch 10, **dadurch gekennzeichnet, dass** die Versorgungsvorrichtung (29) außerdem ein Stoßelement (30), einen Stoßzylinder (31) für Verkleidungsteile (5) und Stoßstangen (32) für Verkleidungsteile (5) enthält.

13. Bauteil gemäß Anspruch 12, **dadurch gekennzeichnet, dass** das Stoßelement (30) horizontal beweglich ist und dass der Stoßzylinder und die Stoßstangen (32) der Verkleidungsteile (5) horizontal sind.

14. Bauteil gemäß Anspruch 12, **dadurch gekennzeichnet, dass** das Stoßelement (30) eine Stoßplatte (33) enthält, vorgesehen, um die Verkleidungsteile (5) vom Lagerraum (22) aus zum Halter (23) für Verkleidungsteile (5) zu stoßen.

15. Bauteil gemäß Anspruch 12, **dadurch gekennzeichnet, dass** der Lagerraum (22) die Form einer Rinne (34) hat, in der das Stoßelement (30) gleitet.

## Claims

1. An assembly formed by a fifth wheel (1) receiving a semi-trailer kingpin (3) and by at least one cowling part (5), wherein:
- the fifth wheel (1) is provided in order to equip a towing vehicle, having a V-shaped opening (8) for said kingpin (3), and comprises a locking and unlocking system (2) for the kingpin (3);
- the at least one cowling part (5) is provided in order to be engaged and locked around said kingpin (3) to serve as a connecting interface and immobilization means between the semi-trailer and a railway unit when said semi-trailer is transported on a railway unit;
**characterized in that**:
• the at least one cowling part (5) is stored in the fifth wheel (1); and **in that**
• the fifth wheel (1) comprises a system (4) for placing the at least one cowling part (5) around the kingpin (3).

2. The assembly according to claim 1, **characterized in that** the locking and unlocking system (2) for the kingpin (3) comprises the following means:
- two holding and centering arms (9a, 9b) mounted pivoting at the front end thereof between a moved-together closed position wherein the kingpin (3) is locked and a spaced-apart open position wherein the kingpin (3) is unlocked and wherein the two holding and centering arms (9a, 9b) are sufficiently separated in order to allow the cowling part to pass (5);
- a locking means of the kingpin (3) mounted on one of the holding and centering arms (9a, 9b) in order to receive the kingpin (3) with automatic locking.

3. The assembly according to claim 2, **characterized in that** the holding and centering arms (9a, 9b) each have an inclined ramp (8a, 8b) provided such that when the holding and centering arms (9a, 9b) are in the moved-together closed position, the inclined ramps (8a, 8b) thereof form a V-shaped opening that extends the V-shaped opening (8) of the fifth wheel (1).

4. The assembly according to claim 3, **characterized in that** the inclined ramps (8a, 8b) each have an opposite cutout (12a, 12b) at the free end of the holding and centering arms (9a, 9b) oriented towards the V-shaped opening (8) of the fifth wheel (1), such that when the holding and centering arms (9a, 9b) are in the moved-together closed position, the cutouts (12a, 12b) form a slot (13) for receiving the kingpin (3) that is centered in relation to the longitudinal axis of the fifth wheel (1) and the inclined ramps (8a, 8b) and the V-shaped opening (8) of the fifth wheel (1) converge towards the receiving slot (13).

5. The assembly according to claim 2, **characterized in that** the locking and unlocking system (2) for the kingpin (3) further comprises an opening jack (27) mounted transversely between the holding and centering arms (9a, 9b) in order to move them symmetrically between the moved-together closed position thereof and the spaced-apart open position thereof.

6. The assembly according to claim 2, **characterized in that** the locking means of the kingpin (3) comprises:
- a locking hook (6) of the kingpin (3), mounted on one of the holding and centering arms (9a, 9b); and
- a blocking finger (7a, 7b) of the locking hook (6) mounted pivoting on one of the holding and center arms (9a, 9b), the locking hook (6) and the blocking finger (7a, 7b) being provided each on a separate holding and centering arm (9a, 9b).

7. The assembly according to claim 2, **characterized in that** the locking means of the kingpin (3) comprises two blocking fingers (7c) mounted pivoting on one of the holding and centering arms (9a, 9b), the blocking fingers (7c) being provided each on a separate holding and centering arm (9a, 9b).

8. The assembly according to any one of the preceding claims, **characterized in that** the system (4) for placing a cowling part (5) is situated below the locking and unlocking system (2).

9. The assembly according to any one of the preceding claims, **characterized in that** the system (4) for placing a cowling part (5) comprises a holder (23) for cowling parts (5) movable vertically between a low position for loading a cowling part (5) and a high position for placing a cowling part (5) around the kingpin (3).

10. The assembly according to claim 9, **characterized in that** the system (4) for placing a cowling part (5) further comprises the following means:
- a store (22) able to contain one or several cowling parts (5);
- a supply device (29) that supplies the cowling part (5) holder (23) with cowling parts (5) from the store (22).

11. The assembly according to claim 9, **characterized in that** the holder (23) for cowling parts (5) is moved vertically by a connecting rod (24) lifting cowling parts (5), a first end of which is mounted pivoting on the end of a jack (25) for lifting the cowling parts (5) that is substantially horizontal, while the other end of the connecting rod (24) for lifting cowling parts (5) is mounted pivoting below the holder (23) for cowling parts (5).

12. The assembly according to claim 10, **characterized in that** the supply device (29) comprises a pushing element (30), a jack (31) for pushing the cowling parts (5) and connecting rods (32) for pushing the cowling parts (5).

13. The assembly according to claim 12, **characterized in that** the pushing element (30) is movable horizontally and **in that** the jack and the connecting rods (32) for pushing cowling parts (5) are horizontal.

14. The assembly according to claim 12, **characterized in that** the pushing element (30) includes a pushing plate (33) provided to push the cowling parts (5) from the store (22) towards the holder (23) for cowling parts (5).

15. The assembly according to claim 12, **characterized in that** the store (22) is in the form of a trough (34) within which the pushing element (30) slides.
